(19) Europäisches Patentamt
European Patent Office
Office européen des brevets

(11) Veröffentlichungsnummer: **0 505 483 B1**

(12) # EUROPÄISCHE PATENTSCHRIFT

(45) Veröffentlichungstag der Patentschrift: **10.08.94**

(51) Int. Cl.$^{5}$: **G01F 1/66**

(21) Anmeldenummer: **91902170.9**

(22) Anmeldetag: **13.12.90**

(86) Internationale Anmeldenummer:
**PCT/EP90/02180**

(87) Internationale Veröffentlichungsnummer:
**WO 91/09282 (27.06.91 91/14)**

(54) **ULTRASCHALL-GAS-/FLÜSSIGKEITS-DURCHFLUSSMESSER.**

(30) Priorität: **15.12.89 DE 3941546**

(43) Veröffentlichungstag der Anmeldung:
**30.09.92 Patentblatt 92/40**

(45) Bekanntmachung des Hinweises auf die Patenterteilung:
**10.08.94 Patentblatt 94/32**

(84) Benannte Vertragsstaaten:
**AT BE CH DE ES FR GB IT LI NL SE**

(56) Entgegenhaltungen:
**EP-A- 0 303 255**

**SIEMENS FORSCHUNGS-UND ENTWICKLUNGSBERICHTE, Band 15, Nr. 3, 1986, Springer Verlag, Berlin, DE; A.V.JENA: "Ultraschallsensor für hochauflösende Durchflussmessung", Seiten 126-134**

(73) Patentinhaber: **SIEMENS AKTIENGESELLSCHAFT**
**Wittelsbacherplatz 2**
**D-80333 München(DE)**

(72) Erfinder: **RUSSWURM, Winfried**
**Dechbettenerstrasse 19a**
**D-8400 Regensburg(DE)**
Erfinder: **VON JENA, Alexander**
**Oskar-von-Miller-Ring 29**
**D-8000 München 2(DE)**

**EP 0 505 483 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die vorliegende Erfindung bezieht sich auf einen Ultraschall-Durchflußmesser wie im Oberbegriff des Anspruchs 1 angegeben.

Es sind Ultraschall-Durchflußmesser in Rohrform bekannt, in deren Rohrinnerem man Ultraschall als Fadenstrahl durch einen dagegen wesentlich größeren Querschnitt des Mediums schräg zur Strömungsachse bzw. Rohrachse durch das dort strömende Gas bzw. durch die dort strömende Flüssigkeit hindurchtreten läßt, um die sich aus der Strömungsgeschwindigkeit ergebende Laufzeitänderung des Ultraschalls zu messen. Mit dem so ermittelten Wert für die Strömungsgeschwindigkeit kann aus dem Rohrquerschnitt und an sich bekannten Korrekturparametern die pro Zeiteinheit hindurchströmende Menge des Gases bzw. der Flüssigkeit ermittelt werden. Um einen möglichst langen, aktiven Ultraschallweg La im strömenden Medium zu haben, jedoch mit technisch sinvoller Länge des Durchflußmessers auszukommen, hat man im Rohrinnern mehrfach reflektierte, schräg zur Rohrachse verlaufende Ultraschallwege, insbesondere in "W"-Form vorgesehen. Von einem in der Rohrwandung angeordneten Sendewandler wird der Ultraschallwandler schräg zur Rohrachse, auf die gegenüberliegende Rohrwand ausgerichtet, abgestrahlt, dort zur wiederum gegenüberliegenden Wand weiterreflektiert, nochmals an der dann wiederum gegenüberliegenden Wand reflektiert und schließlich auf den Empfangswandler hin weiterreflektiert.

Aus Siemens Forschungs- und Entwicklungsberichte, Band 15 (1986) Seite 126 bis 134, Figur 11, ist für einen wasser-durchflossenen Wärmemengenzähler die Verwendung eines Vierkant-Meßrohres mit rechteckförmigem Querschnitt H . B mit H:B = 2:1 bekannt, um die gesamte Strömung mit dem Ultraschall nahezu gleichförmig erfassen zu können.

Es ist üblich einen solchen akustischen Schallweg im Rohrinneren abwechselnd in der einen und in der anderen Richtung von dem Ultraschall durchlaufen zu lassen, nämlich einmal mit der Strömungsrichtung und einmal entgegen der Strömungsrichtung des Mediums. Aus dem sich ergebenden Differenzsignal erhält man die entsprechende Größe für die Auswertung der volumenmäßigen Durchströmung des Rohres. Es wird angestrebt, möglichst lange Laufzeitdifferenz für den Ultraschall im Verhältnis zur Länge des Durchflußmessers d.h. im Verhältnis zum Abstand zwischen Sendewandler und Empfangswandler zu haben. Für den Weg in Strömungsrichtung einerseits und für den Weg entgegen der Strömungsrichtung andererseits werden die Funktionen der zwei Wandler als Sendewandler und als Empfangswandler untereinander vertauscht.

Eine im Regelfall einzuhaltende Randbedingung ist, daß der z.B. durch Ausgestaltungen des Rohres im Bereich des Durchflußmessers verursachte Druckabfall einen bestimmten Wert nicht überschreitet und vorzugsweise auch leicht einstellbar ist.

An die ebenen Wandflächen eines solchen Vierkantrohres lassen sich die Wandler in einfacher Weise anbringen und Übergänge auf üblichen runden Querschnitt der sonstigen Rohrleitung sind verfügbar.

Aufgabe der vorliegenden Erfindung ist es, einen an sich bekannten Durchflußmesser mit Rechteck-Meßrohr für einen speziellen Anwendungsfall nämlich für Haushalts-Brenngas und für einen Meßbereich von $5 \times 10^{-3}$ $m^3/h$ bis 30 $m^3/h$ Durchflußmenge hinsichtlich seiner Meßgenauigkeit seiner Funktionssicherheit zu optimieren. Diese Aufgabe wird mit den Merkmalen des Patentanspruchs 1 gelöst.

Die Erfindung beruht auf dem Gedanken, den Querschnitt der möglichst homogene Ultraschall-Durchstrahlung des Meßraumes so zu bemessen, daß sich für das als Fluid vorgegebene Haushalts-Brenngas ein möglichst großes Empfangs-Meßsignal mit optimalem Laufzeitbereich des Ultraschallsignals innerhalb des Bereichs der Strömungsgeschwindigkeiten für den vorgegebenen Mengen-Meßbereich ergibt.

Für die Vielzahl der obigen, zu berücksichtigenden Parameter hat sich der anspruchsgemäß enge Bereich für das Abmessungsverhältnis H:B des rechteckförmigen Meßrohres mit der Abmessung H = ca. 30 mm als Bereich des Optimums der Separation des Nutzsignals des W-förmigen Weges gegenüber dem parasitären Signal des V-förmigen Weges ergeben. Die obere Grenze liegt bei 10:1, vorzugsweise sogar 6:1. Insbesondere liegt das Abmessungsverhältnis zwischen 5:1 und 6:1. Solche Querschnitte haben bei guter Gleichmäßigkeit der Gasdurchströmung und Homogenität günstig zu erfassende Ultraschall-Laufzeiten für den ganzen sich aus dem vorgegebenen Mengen-Meßbereich ergebenden Bereich der Strömungswerte.

Ferner ist es noch Aufgabe der vorliegenden Erfindung, das auftretende Signal des V-förmigen Weges des Ultraschalls in einem erfindungsgemäßen Durchflußmesser für den als Meßstrecke der W-förmige Ultraschallweg zwischen Eingangswandler und Ausgangswandler vorgegeben ist, möglichst klein zu halten.

Die nachfolgenden Ausführungen dienen vor allem auch zur weiteren Erläuterung der Erfindung.

Die Fig. 1 und 2 zeigen zusammengenommen die Ansicht in Axialrichtung der Strömung (Fig. 1) und die Seitenansicht des in Längsrichtung aufgeschnittenen Rohres (Fig. 2). Mit H und B sind die oben definierten Abmessungen für die Höhe und Breite des Rechteckrohres 1 angegeben. Mit 2 und 3 sind die

Seitenwände und mit 4 und 5 sind die untere Seitenwand und die obere Seitenwand bezeichnet. Dieselben Bezugszeichen zeigt die Fig. 2. In die obere Seitenwand 5 sind die Wandler 11 und 12 eingesetzt, und zwar mit ihrer Sende- bzw. Empfangsfläche 111, 112 schräg gerichtet zur Seitenwand 5 (wie dies die Fig. 2 zeigt). Mit a ist in Fig. 2 der Winkel Alpha des W-förmigen Ultraschallweges 21 bezeichnet, nämlich bezogen auf die Seitenwände 4 und 5. Die Flächen 111 und 112 sind so gerichtet, daß der Strahlweg 21 diese Flächen senkrecht trifft.

Es ist aber prinzipiell nicht zu vermeiden, daß ein Anteil akustischer Energie auch in einer solchen Winkel von der Fläche 111 bzw. 112 abgestrahlt bzw. von diesen Flächen empfangen wird, der zu einem V-förmigen Weg 22 im Rohrinneren des Rohres 1 führt. Der V-förmige Weg mit dem Winkel Beta (= b) hat eine andere Laufzeit als der gewünschte W-förmige Weg, der vorteilhafterweise eine größere akustische Weglänge im Rohr 1 hat, als dies für den V-förmigen Weg der Fall ist.

In Fig. 2 ist die Gesamtlänge des Durchflußmessers mit L angegeben. Die übrigen Zeichnungen in der Fig. 2 beziehen sich auf die nachfolgend gegebene physikalische Erläuterung zur Erfindung.

Für einen den Fig. 1 und 2 entsprechenden erfindungsgemäßen Durchflußmesser mit dreifacher Schallreflexion an unterer und oberer Seitenwand beträgt die wirksame Strömungsgeschwindigkeit $v_{eff}$

$$v_{eff} = v^{*} \cos a \qquad (1)$$

mit Alpha als dem Winkel zwischen der axialen Strömungsrichtung und der Abstrahl- bzw. Empfangsrichtung der Wandler 11 und 12 und mit $v^*$ als über den Schallweg geminderter Strömungsgeschwindigkeit. Mit dem zeitlich differentiellen Volumenstrom dV/dt hängt $v^*$ zusammen:

$$dV/dT = v^{*} . F \qquad (2)$$

mit F gleich der Querschnittsfläche H x B. Die Länge $L_s$ des Schallwegs im bewegten Medium ergibt sich zu

$$L_s = \frac{(N+1) \ . \ H}{\sin a} = \frac{4 \ H}{\sin a} \text{ für } N = 3 \text{ ("W-Anordnung)} \qquad (3)$$

mit N = Anzahl der Reflexionen. Mit der Länge der Meßstrecke $L_a$ zwischen den Durchstoßpunkten des Ultraschalls durch die (gedachte) obere Seitenwand (siehe auch die Fig. 2) zum strömenden Medium

$$L_a = (N+1) \ H \cot a = 4 \ H \cot a \text{ für } N = 3 \text{ ("W"-Anordnung)} \qquad (4)$$

erfolgt für die erzielbare Laufzeitdifferenz

$$\text{Delta } t = \frac{2 \ L_s \ . \ v_{eff}}{c^2} \simeq \frac{2L_a \quad v^{*}}{c^2} \simeq \frac{2 \ (N+1) \ . \ H \ . \ v^{*} \ . \ \cot a}{c^2} \qquad (5)$$

Vom Rohreinlaß bis zum Durchstoßpunkt (Fig. 2) befindet sich zwar strömendes Medium, das durch den Ultraschallstrahl aber nicht erfaßt wird. Diese Vorlauflänge $L_v$ hängt vom Einstrahlwinkel Alpha und vom Radius r des Wandlers ohne Berücksichtigung der Wandlergehäusewandstärke ab:

$$L_v = \frac{r}{\sin a} \qquad (6)$$

Der Schallweg $L_w$ innerhalb der Wandlertaschen ist

$$L_w = r \cot a \qquad (7)$$

Dieser Schallweg verursacht zusätzliche Signaldämpfung und wird deshalb möglichst klein gehalten. Der nicht nutzbare Anteil $2L_v/L$ an der Gesamtlänge $L = L_a + 2L_v$ errechnet sich zu

$$\frac{L_w}{L_a} = \frac{r}{4\ H} \text{ bzw. } \frac{L_v}{L_a} = \frac{L_v}{L-2L_v} = \frac{r}{4\ H \cos a} \text{ bzw. }$$

$$\frac{2L_v}{L} = \frac{r}{2\ H \cos a + r} \qquad (8)$$

Dieser Anteil hängt vom Einstrahlwinkel Alpha (= a), vom Wandlerradius r und von der Höhe H des Rohrquerschnittes ab. Je höher das Rohr und je kleiner der Wandlerradius r, desto größer ist der nutzbare Anteil. Der nutzbare Anteil wird mit kleinerem Winkel Alpha größer (bis sich mit Alpha = 0 der Grenzfall des geradlinig durchschallten Meßrohrs ohne Reflexionen (keine "W"-Anordnung mehr) ergibt). Das ebenfalls zur Messung nicht nutzbare Volumen der Wandlertasche

$$V_t = \frac{r^3 \quad \cot a}{2} \qquad (9)$$

wird bei vorgegebenem r mit größerem Alpha kleiner. Damit wird der Einfluß der Querschnittserweiterung und -verengung auf Turbulenzen und Druckverlust geringer.

Bei der "W"-Anordnung wird als überlagertes Störsignal der Beitrag des parasitären "V"-Schallweges 22 beobachtet, der im Winkel Delta a zur Normalen der Wandlerfläche 111, 112 ("W"-Schallweg) abgestrahlt wird und im Winkel Beta einmal (N = 1) reflektiert wird.

Eine lokale Separation der Schallwege läßt sich erreichen.

Es gilt die Beziehung Delta a = a-b. Für beide Schallwege konstant ist der Abstand der Wandlermittelpunkte $L_m$. Für den "W"-Schallweg setzt sich dieser zusammen aus $L_m = L_a + 2L_r$ (Fig. 2). Mit der Beziehung

$L_r = r \cot a \cos a$ (10)

und aus (4) ergibt sich für den Winkel Delta a

$$\text{Delta a} = \quad - \arctan((1- \frac{H}{r \cos a \quad + 2H} \tan a) \qquad (11)$$

Das bedeutet, daß bei a ≠ 0° und ≠ 90° ein größeres Delta a durch ein kleineres r und ein größeres a erreicht wird. Bei r verschieden von 0 und a fest kann ein größeres Delta a noch über die Höhe H erreicht werden. Für r sehr viel kleiner als H bzw. r = 0 kann (11) einfacher durch

$$\text{Delta a} \quad = \quad a-\arctan(\frac{\tan a}{2}) \qquad (12)$$

ausgedrückt werden. Delta a ist also von der Höhe H unabhängig. Hier liefert die Reihenentwicklung für arctan(x) und tan(x) die Näherungformel

$$\text{Delta a} = \quad \frac{a}{2} - \frac{a^3}{8} \text{ (im Bogenmaß)} \qquad (13)$$

Ein großes Delta a bedeutet eine gute Untdrückung der "V"-Signalamplitude Deshalb sollte auch der Einstrahlwinkel so groß wie möglich gemacht werden und r sehr viel kleiner als H erfüllt sein. Der Abstand

der Auftreffpunkte

$L_d = L_a/4 = H \cot a$ (14)

soll mindestens $L_d$ größer $2L_v$ sein, d.h. $L_a$ größer $8L_v$, um die Koinzidenz beider Strahlwege so gering wie möglich zu halten und die Reduzierung der "V"-Amplitude durch reflexionsdämpfende Elemente zu ermöglichen. Da meist $L_a$ fest vorgegeben ist, ist auf eine entsprechende Dimensionierung von $L_v$ zu achten.

Auch eine zeitliche Separation der Schallwege läßt sich erreichen.

Die Länge des Schallweges ist für r=0 durch $L_s$ beschreibbar, der Schallweg für den "V"-Pfad durch $L'_s$ nach (3) und (12). Die Weglängendifferenz $dL = L_s - L'_s$ ist für den einfachen Fall r=0 bzw. r sehr viel kleiner als H beschreibbar durch

$$dL = H \frac{4-2(3\cos^2 a + 1)^{1/2}}{\sin a} \qquad (15)$$

Mit den Beziehungen $t_{auf} = L_s/(c-v_{eff})$ für "stromauf" und $t_{ab} = L_s/(c+v_{eff})$ für "stromab" für die strömungsabhängigen Laufzeiten läßt sich die Zeitdifferenz $t_d$ zwischen dem Eintreffen des "V"- und "W"-Signals darstellen als

$$t_{d(auf)} = \frac{dL}{(c-v_{eff})}$$
$$t_d(ab) = \frac{dL}{(c+v_{eff})} \qquad (16)$$

Je größer $t_d$ ist, desto besser ist das "V"-Signal vom "W"-Signal zeitlich separiert, d.h. Auswertefehler durch Überlagerungseffekte werden verringert (Zeitmultiplex). Es ist zu beachten, daß bei Strömung stromaufwärts die Zeit $t_d$ zunimmt und stromabwärts abnimmt, also auch die zeitliche Separierbarkeit abnimmt. dL sollte deshalb so groß gemacht werden, daß bei Maximalströmung beide Signalanteile noch genügend zeitlich separiert sind. Größeres a, d.h. steilere Einstrahlung und größere Höhe H vergrößern dL. Eine oben erwähnte Randbedingung ist der zulässige Druckverlust Delta p, der von der Meßrohrgeometrie wie folgt abhängt:

$$\text{Delta p prop } V^{*2} \cdot L \cdot \frac{U}{F} \text{ prop } \left(\frac{dV.}{dt}\right)^2 \cdot L \cdot \frac{U}{F^2} \qquad (17)$$

mit L = Länge des Meßrohres und U Umfang der durch F beschriebenen Querschnittsfläche. Dies bedeutet, daß minimaler Druckabfall bei quadratischer Meßrohrgestaltung eintritt.

Beim Design eines Ultraschallmeßrohres nach der "W"-Anordnung ist im allgemeinen die maximale Meßrohrlänge $L_a$, der maximale Volumendurchsatz dV/dt, der maximale Druckabfall Delta p bei Verwendung eines bestimmten Mediums und die maximale Einbauhöhe H vorgegeben. Zu erreichen ist ein möglichst großes Delta t bei möglichst geringem Störeinfluß. Aus diesem maximalen effektiven Wandlerabstand $L_a$ (= Abstand der beiden Durchstoßpunkte des Wandlerstrahls an der inneren Deckenfläche) und der maximalen Einbauhöhe $H_{max}$ kann der Einstrahlwinkel bestimmt werden:

$$\tan a = \frac{4H\max}{L_a} \qquad (18)$$

Die Querschnittsfläche bzw. die Breite B des Meßrohres wird bestimmt durch den Druckverlust. Sie wird in einer einfachen experimentellen Prozedur so weit verändert, bis bei Maximalfluß der maximale Druckverlust erreicht ist. Die sich daraus ergebende Querschnittsfläche bestimmt die erzielbare Laufzeitdifferenz Delta t:

$$t = \frac{2L_a \cdot dV/dt}{H_{max} \cdot B.c^2} \qquad (19)$$

Aus (18) und (19) ergibt sich für das Verhältnis aus Höhe und Breite des Meßrohres:

$$\frac{H}{B} = \frac{F \cdot \tan^2 a \cdot c^4 \cdot \text{Delta } t^2}{64\,(dV/dt)^2} = \frac{L_a^2 \tan^2 a}{16\,F} \qquad (20)$$

Bei einem langgestreckten Rohr ($L_a$größer H, $L_a$ größer B) wird sich H/B größer/gleich 2 einstellen. Das bedeutet ein Meßrohr mit deutlich nichtquadratischem Querschnitt bis hin zu einem extremen Verhältnis der Kantenlängen.

Zusammengefaßt ergibt sich somit für r = konstant und dem Winkel Alpha (= a) verschieden von 0° und 90°, d.h. Strahlweg mit Reflexionen, und N=3, ergeben sich für die Wahl des Einstrahlwinkels a folgende Kriterien:

Eine gute, relative Ausnutzung der Meßrohrlänge G1. 8 kann durch ein möglichst kleines a erzielt werden. Ein kleines Volumen der Wandlertaschen G1. 9, kurzer Schallweg in den Wandlertaschen G1. 7, großer Störabstandswinkel G1.11, G1.12, G1. 13 eine gute absolute Ausnutzung der Meßrohrlänge G1. 6 und eine gute zeitliche Separation der Schallwege G1. 15, G1. 16 kann mit einem möglichst großen Winkel a erreicht werden. Da der Störabstand, d.h. die Separation der Schallwege, die Vermeidung von Turbulenzen und eine optimale absolute Ausnutzung der Meßrohrlänge entscheidend für die Qualität der Messung sind, sollte in der Praxis ein möglichst großes a (z.B. a größer 35°) gewählt werden. Prinzipiell ist a bei vorgegebenem $L_a$ nach G1. 18 nur durch die nach den Einbaumaßen des Rohres begrenzte Höhe beschränkt. Da sich über H jedoch wichtige Größen (siehe oben) optimieren lassen, sollte H so groß wie möglich gemacht werden. Allerdings bedeutet ein großes H zusätzliche Signaldämpfung durch lange Schallwege $L_s$, die jedoch durch genügend hohen Schallpegel kompensiert werden kann.

Praktisches Zahlenbeispiel:

Meßrohrlänge $L_a$ = 150 mm, Druckabfall Delta p = 2 mbar, maximaler Volumenstrom dV/dt = 0,00167 $m^3/s$, Medium Luft (Schallgeschwindigkeit c = 340 m/s) bei Raumtemperatur, r = 5 mm. Experimentell erlaubt der Druckabfall die Querschnittsfläche F = 1,2 $cm^2$. Die maximale Einbauhöhe beträgt H = 31,5 mm. Damit wird der Einstrahlwinkel a = 40° und die Breite B = 3,8 mm. Das ergibt für das Verhältnis H/B den Wert 8,25. Die nutzbare Laufzeitdifferenz wird Delta t = 36 $\mu$s betragen. Weitere Größen: Störabstandswinkel (mit G1. 11) Delta = 16,1°, $L_v$ = 7,8 mm, L 165,5 mm, $2L_v/L$ = 0,094, d.h. 90,6 % der Meßrohrlänge werden genutzt. Das Volumen des Meßrohrs beträgt V = 19,9 $cm^3$, das Volumen der Wandlertaschen $V_t$ = 2.0,47 $cm^3$. Da $8L_v$ = 62 mm kleiner $L_a$ = 150 mm ist, ergibt sich eine gute lokale Selektierbarkeit der Schallwege. Die Größe dL wird zu 33,2 mm bestimmt. Damit trifft bei nichtbewegtem Medium das "V"-Signal ca. 98 $\mu$s vor dem "W"-Signal ein.

Wie sich aus dem Zahlenbeispiel erkennen läßt, ergibt sich ein gegenüber dem Bekannten extremeres Verhältnis H:B. Es wird aber noch ein weiterer Vorteil sichtbar: Bei quadratischem Querschnitt gleicher Fläche wäre H=B= 11 mm und damit die den Wandlern zugewandte Seite breiter als der eigentliche Wandler. Dies hätte eine inhomogene Durchschallung des Meßraumes zur Folge mit den daraus entstehenden gravierenden Meßfehlern. Bei einem Verhältnis H/B größer 4 ist die den Wandlern zugewandte Seite erheblich schmaler als der Wandler. Ein Meßrohrquerschnitt mit extremem Kantenverhältnis 4:1 bis 10:1 ist auch in der Lage, an den Strömungseinläßen oder an den Wandlertaschen entstandene oder stromaufwärts entstandene, ins Meßrohr verschleppte Turbulenzen zu minimieren und damit einen noch weiteren Beitrag zur Meßgenauigkeit, Reproduzierbarkeit und Signalstabilität des Ultraschall-Meßverfahrens beizutragen.

Mit einem erfindungsgemäß bemessenen rechteckförmigen Querschnitt versehenen Meßrohr 1 und mit der Wandleranordnung und -bemessung für homogene Durchstrahlung lassen sich zuverlässig Durchflußmessungen für den Bereich $5x10^{-3}$ $m^3/h$ bis 30 $m^3/h$ durchführen. Z.B. ist dafür eine Bemessung H:B mit (vorgegebenen) 30 mm zu 5 bis 6 mm passend. Bei maximaler Durchflußmenge kann der Druckabfall bis

25 mbar ansteigen. Mit elektronischer Nachkorrektur läßt sich ein solcher Durchflußmesser von 30 $m^3/h$ bis sogar herab zu $10^{-3}$ $m^3/h$ als genaues Meßgerät benutzen.

## Patentansprüche

1. Ultraschall-Durchflußmesser mit einem durchströmten Meßrohr (1) und mit Ultraschall-Sende-/Empfangswandlern (11, 12), die für einen "W"-förmigen Ultraschallweg (21) mit im Meßrohr (1) mehrfachen Reflexionen plaziert in einem entsprechenden Abstand ($L_m$) voneinander an ein und derselben Seitenwand (5) des Meßrohrs (1) angebracht sind, mit einem Meßrohr (1), das einen, bezogen auf die Strömungsrichtung (v), rechteckförmigen Querschnitt mit der Abmessung (H . B) hat, wobei die Breite-Abmessung (B) im wesentlichen senkrecht zum Ultraschallweg (21) im Meßrohr (1) gerichtet ist und dieses homogen durchstrahlt ist,
   **gekennzeichnet dadurch,**
   daß für einen Meßbereich zwischen $5x10^{-3}$ $m^3/h$ und 30 $m^3/h$ Haushalts-Brenngas
   das Abmessungsverhältnis H:B = 4:1 bis 10:1 beträgt, wobei die Abmessung H = ca. 30 mm bemessen ist.

2. Ultraschall-Durchflußmesser nach Anspruch 1 mit einem Abmessungsverhältnis H:B = 4:1 bis 6:1.

3. Ultraschall-Durchflußmesser nach Anspruch 1 mit einem Abmessungsverhältnis H:B = 5:1 bis 6:1.

## Claims

1. Ultrasound flowmeter having a throughflow measuring tube (1) and having ultrasound transmitting/receiving transducers (11, 12) which are fitted on one and the same side wall (5) of the measuring tube (1), placed at a suitable distance ($L_m$) from one another, for a "W"-shaped ultrasound path (21) having multiple reflections in the measuring tube (1), where the measuring tube (1) has a rectangular cross-section with respect to the flow direction (v) with the dimension (H . B), the breadth dimension (B) being directed essentially at right angles to the ultrasound path (21) in the measuring tube (1), and flowing homogeneously through the latter, characterized in that the dimension ratio is H:B = 4:1 to 10:1, the dimension H being dimensioned to H = approximately 30 mm, for a domestic fuel gas measurement range between $5 \times 10^{-3}$ $m^3/h$ and 30 $m^3/h$.

2. Ultrasound flowmeter according to Claim 1, having a dimension ratio H:B = 4:1 to 6:1.

3. Ultrasound flowmeter according to Claim 1, having a dimension ratio H:B = 5:1 to 6:1.

## Revendications

1. Débitmètre à ultrasons comportant un tube de mesure (1) parcouru par un écoulement et des transducteurs (11, 12) d'émission/réception d'ultrasons, qui sont disposés sur une seule et même paroi latérale du tube de mesure (1) en étant placés à une distance ($L_m$) mutuelle adéquate, pour l'obtention d'un trajet (21) en forme de "W" des ultrasons avec des réflexions multiples dans le tube de mesure (1), et un tube de mesure (1), qui a une section transversale de forme rectangulaire, rapportée à la direction (v) du courant, et ayant pour dimensions (H.B), la dimension en largeur (B) étant comptée essentiellement perpendiculairement au trajet (21) des ultrasons dans le tube de mesure (1), et ce tube étant traversé de façon homogène par le rayonnement,
   caractérisé par le fait
   que pour une plage de mesure comprise entre $5 \times 10^{-3}$ $m^3/h$ et 30 $m^3/h$ de gaz combustible domestique, le rapport des dimensions H:B est compris entre 4:1 et 10:1, la dimension H ayant une valeur égale à environ 30 mm.

2. Débitmètre à ultrasons suivant la revendication 1, dans lequel le rapport H:B des dimensions est compris entre 4:1 et 6:1.

3. Débitmètre à ultrasons suivant la revendication 1, dans lequel le rapport H:B des dimensions est compris entre 5:1 et 6:1.

FIG 2

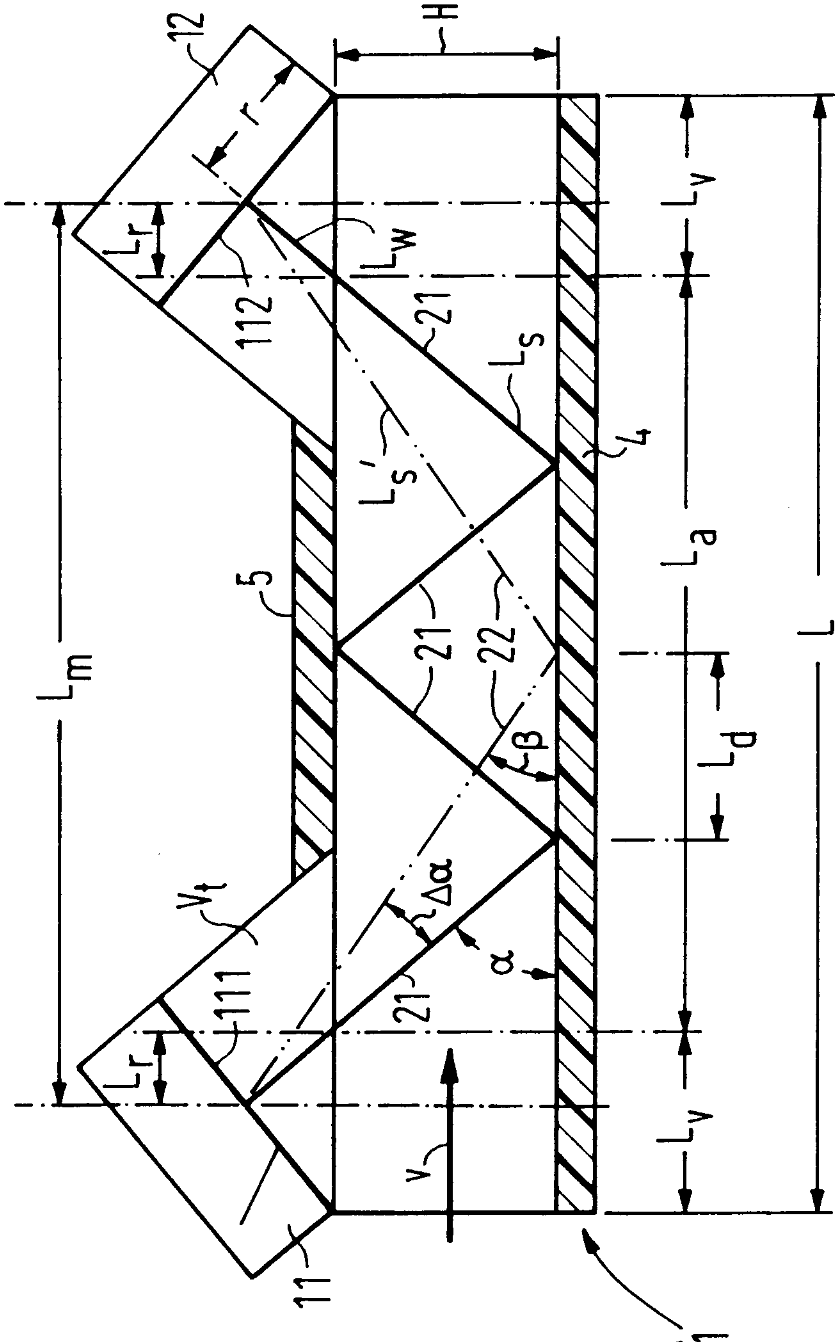
12
H
r
$L_v$
$L_r$
$L_w$
112
21
$L_s$
$L_s'$
4
$L_a$
L
5
21
22
$L_d$
β
$L_m$
$V_t$
111
Δα
α
21
$L_r$
$L_v$
v
11
1

FIG 1

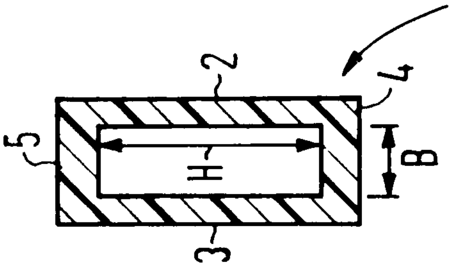
5
2
4
H
B
3